# EUROPEAN PATENT APPLICATION

(11) **EP 4 276 138 A1**
(43) Date of publication of application: **15.11.2023**
(21) Application number: 21917912.4
(22) Date of filing: 16.12.2021
(51) Int. Cl.: C08J 3/075, C08J 3/12, C08J 3/24, C08B 37/08, C08L 71/02, C08L 5/08

(54) **THERMOSENSITIVE HYALURONIC ACID BEAD GEL**

(30) Priority: 11.01.2021 KR 20210003368; 07.12.2021 KR 20210173648
(71) Applicant: Yu, Ulsan 44496 (KR)
(72) Inventor: CHO, Kwang Yong, Daegu 41158 (KR); WOO, Sang Uk, Yongin-si, Gyeonggi-do 17079 (KR); KIM, Sang Cheol, Gimhae-si, Gyeongsangnam-do 51004 (KR); PARK, Jinhyun, Gimhae-si, Gyeongsangnam-do 51004 (KR)
(74) Representative: Roos, Peter
(86) International application number: PCT/KR2021/019146
(87) International publication number: WO 2022/149750

(57) **Abstract**

The present invention relates to a thermosensitive hyaluronic acid bead gel. Specifically, the spherical thermosensitive hyaluronic acid bead gel has high purity and a transparent spherical shape with a uniform and selective size, has the characteristics wherein the shape thereof is not deformed even under a sterilization condition at 121°C, and is very excellent in biocompatibility, viscoelasticity, and stability against heat and enzymes.

## Description

### Technical Field

The present disclosure relates to a thermosensitive hyaluronic acid bead gel, wherein the thermosensitive hyaluronic acid bead gel may be prepared by obtaining a spherical gel by mixing hyaluronic acid, a crosslinking agent, and an aqueous alkaline solution and then mixing with a ternary copolymer.

### Background Art

Generally, widely known methods of preparing beads consisting of crosslinked hyaluronic acid involve combination of chemical methods and physical methods, and those known for methods of separating beads include methods of precipitating via a fine nozzle or lipidifying and encapsulating the outside and methods of acquiring solubilized biodegradable polymers by solvent extraction evaporation following dispersion using surfactants.

In order to increase uniformity of particles by physical methods, it may be affected by shapes and stirring rate of an impeller, which mostly requires maintaining of a high-speed stirring rate. The method using the fine nozzle does not maintain a perfect spherical shape by forming an appearance similar to pomegranate fruits, and when a spherical bead is obtained through lipidation and encapsulation of the outside, the liquid phase inside flows out due to damage by physical external forces, while the use of surfactants and organic solvents that are harmful to human body is essential when a solvent extraction evaporation method is applied, such that complete removal of final products is required.

Other general methods of preparing beads consisting of crosslinked hyaluronic acid include methods of preparing in an insoluble precipitate form through ionic bonding with anionic hyaluronic acid using an excess amount of a cationic substance, preparing an insoluble form using an excess amount of crosslinking agent for physical granulation after drying, or combining a hydrophobic substance to a carboxyl group of hyaluronic acid, dissolving in an organic solvent, forming microbeads using emulsifiers in two different phase-separated solvents, and then recovering microbeads by a solvent extraction method. Documents related to preparation of hyaluronic acid beads that are crosslinked by BDDE include preparation methods, in which, after molecular weight reduction occurs by dissolving hyaluronic acid in an aqueous alkaline solution overnight at 10°C, an excess amount of BDDE (20 mg of BDDE per 100 mg of hyaluronic acid, about 40 mol% compared to a site of a crosslinking reaction) is added, an olive oil stirring reaction is carried out, recovery is followed with a filter, and then purification is performed using 70% aqueous acetone solution, distilled water, and phosphate buffer saline (PBS), which shows limitations in use in the application field due to high hardness and uneven shape with high chemical strain rate close to 20 to 30% and a low degree of swelling of 18.99 to 23.02.

In addition, a method of preparing nano/microbeads by carrying out a crosslinking reaction of ligands of a group consisting of alendronate (ALD), adenosine diphosphate (ADP), and adenosine triphosphate (ATP) as crosslinking agents to prepare crosslinked hyaluronic acid, dissolving the same, and then dropping into polyvalent cations also shows limitations in application fields due to issues associated with safety and stability.

In addition, in a patent for a hydrogel composition for preventing tissue adhesion, composed of 15 to 30 wt% of polyethylene oxide-polypropylene oxide-polyethylene oxide ternary copolymer, 2.5 to 4.5 wt% of water-insoluble phase hyaluronic acid (0.02 to 0.1 wt% of crosslinking agent), and 0.1 to 1 wt% of sodium alginate, the crosslinked hyaluronic acid is an amorphous gel rather than spherical, and the polyethylene oxide-polypropylene oxide-polyethylene oxide ternary copolymer is considered to be in an amount of 15 to 30 wt%, which is in a general range for having thermosensitive properties.

However, hyaluronic acid is a material with fairly high hydrophilicity and has had limitations in preparation for transparent, highly swellable, and uniform spherical beads by the generally known methods. Since hyaluronic acid which is in an aqueous phase in the oil phase has considerably high hydrophilicity, it is difficult to remove moisture by solvent evaporation methods, and when organic solvents are added by solvent extraction methods, particles clump together to make it hard to prepare beads having uniform size. Moreover, the bead preparation method using hyaluronic acid known to date is to prepare in an insoluble precipitate form through ionic bonding with anionic hyaluronic acid using an excess amount of cationic substances, or to make an insoluble form using an excess amount of crosslinking agents for physical granulation by drying, or to prepare via a solvent extraction method by combining a hydrophobic substance to a carboxyl group of hyaluronic acid and then dissolving in an organic solvent, showing limitations in the application field due to very small particle size, non-uniform shapes, very low degree of swelling in an aqueous solution, and a hard opaque particle form.

Due to the unique material properties of hyaluronic acid as described above, prior techniques could not be applied to the process of preparing beads with a very high degree of swelling in aqueous solutions while maintaining uniform spherical shape and transparency.

In addition, in order to secure thermosensitive properties using polyethylene oxide (PEO)-polypropylene oxide (PPO)-polyethylene oxide (PEO) triblock copolymer, there is a limitation that preparation should be carried out with application of high content of 13 wt% to 30 wt%.

### Disclosure of the Invention

### Technical Goals

An object of the present disclosure is to provide a spherical thermosensitive hyaluronic acid bead gel which is transparent and highly swellable with a uniform spherical shape, ensuring excellent biocompatibility under various environments in vivo and ex vivo owing to uniform spherical shape and size adjustability as well as adjustable decomposition period of spherical hyaluronic acid bead gels through cross-linkage and superior physical stability, so as to be useful in medical devices, pharmaceuticals, cosmetics, and food industries.

### Technical Solutions

In order to achieve the above object, the present disclosure provides a thermosensitive hyaluronic acid bead gel which includes hyaluronic acid and a ternary copolymer, wherein a value of storage modulus (G', Pa) of the thermosensitive hyaluronic acid bead gel at 1 Hz through a frequency sweep is more than twice at 37°C than that at 25°C.

### Advantageous Effects

A spherical thermosensitive hyaluronic acid bead gel has high purity and a transparent, spherical shape with a uniform, selective size, exhibits properties that the shape is not deformed even under a sterilization condition at 121°C, and is very excellent in biocompatibility, viscoelasticity, and stability against heat and enzymes.

### Brief Description of Drawings

FIG. 1 shows a diagram of a temperature sweep result using a rheometer for a spherical hyaluronic acid bead gel prepared in Example 1 and Comparative Examples 1, 2, 3, 4, and 5.
FIG. 2 shows a diagram observed under an optical microscope in that a transparent, spherical hyaluronic acid bead gel is swollen in PBS.
FIG. 3 shows a diagram of a frequency sweep result at 25°C and 37°C using a rheometer for a spherical thermosensitive hyaluronic acid bead gel prepared in Example 1.
FIG. 4 shows a diagram of an extrusion force measurement result for a spherical hyaluronic acid bead gel prepared in Example 1 and Comparative Examples 1, 2, 3, 4, and 5.
FIG. 5 shows a diagram of observing a state after passing through an injection needle for a spherical thermosensitive hyaluronic acid bead gel prepared in Example 1.

### Best Mode for Carrying Out the Invention

The following describes the present disclosure in detail.

The present disclosure provides a spherical hyaluronic acid bead gel which is prepared by adjusting a bead size by a type and relative ratio of a hyaluronic acid solution and oil without using an emulsifier in an oil phase when preparing a spherical thermosensitive hyaluronic acid bead gel, and chemically combining with a small amount of crosslinking agent having two or more epoxy reactive groups (polyfunctional epoxide).

The present disclosure provides a thermosensitive hyaluronic acid bead gel including hyaluronic acid and a ternary copolymer.

The hyaluronic acid refers to hyaluronic acid or a salt thereof, wherein the salt of hyaluronic acid includes both inorganic salts such as sodium hyaluronate, potassium hyaluronate, calcium hyaluronate, magnesium hyaluronate, zinc hyaluronate, and cobalt hyaluronate and organic salts such as tetrabutylammonium hyaluronate.

The molecular weight of the hyaluronic acid or the salt thereof is not particularly limited and is preferably 100,000 to 5,000,000 daltons.

The ternary copolymer may be polyethylene oxide-polypropylene oxide-polyethylene oxide in a range of 1 to 500 kDa.

The thermosensitive hyaluronic acid bead gel may include 8 to 12 wt% of the ternary copolymer.

A value of storage modulus (G', Pa) of the thermosensitive hyaluronic acid bead gel may be 500 to 3000 Pa or 700 to 2000 Pa at 1 Hz and 37°C through a frequency sweep.

In addition, a value of storage modulus (G', Pa) of the thermosensitive hyaluronic acid bead gel may be 50 to 500 Pa or 100 to 400 Pa at 1 Hz and 25°C through a frequency sweep.

A value of storage modulus (G', Pa) of the thermosensitive hyaluronic acid bead gel may be at least 2 times, at least 3 times, at least 4 times, or 5 to 10 times at 1 Hz and 37°C than that at 25°C through a frequency sweep.

It is desirable that an average diameter of the thermosensitive hyaluronic acid bead gel is 50 to 2,000 µm. Depending on the size of the spherical hyaluronic acid bead gel, the range of medical applications may be diversified.

The thermosensitive hyaluronic acid bead gel may maintain its shape even when a pressure of 10 to 25 N is applied.

The spherical thermosensitive hyaluronic acid bead gel of the present disclosure is in a transparent, spherical shape, has a selected size and degradation period, exhibits excellent viscoelasticity and excellent biocompatibility, and is very stable against heat and enzymes.

Specifically, the thermosensitive hyaluronic acid bead gel may be sterilized at a temperature of 120 to 125°C, be no side effects when introduced in vivo, provide physical properties to be used as a wrinkle-ameliorating filler, plastic surgery supplement, joint injection, and anti-adhesion agent, be used as a vehicle to deliver a specific drug or cell to a specific biological site as a drug delivery or cell delivery, and also be used as a cell support for tissue engineering.

The spherical thermosensitive hyaluronic acid bead gel of the present disclosure is prepared without application of conventional preparation methods, that are, a method of lipidifying and encapsulating the outside of a spherical bead, a method of using an emulsifier and a surfactant, a method of physically granulating by drying after forming an insoluble form using an excess amount of crosslinking agent, and a preparation method of combining a hydrophobic material, dissolving in an organic solvent, and then separating the phase.

In addition, the thermosensitive hyaluronic acid bead gel of the present disclosure may be prepared by undergoing a first operation of carrying out a reaction by mixing hyaluronic acid, a crosslinking agent and an aqueous alkaline solution; a second operation of dispersing the reaction mixture in oil and then crosslinking the mixture to prepare a spherical gel; a third operation of recovering the prepared spherical gel to purify it by removing unreactants and impurities; and a fourth operation of mixing the purified spherical gel with a ternary copolymer.

The first operation is to carry out a reaction by mixing hyaluronic acid, the crosslinking agent, and the aqueous alkaline solution, wherein hyaluronic acid is added to the aqueous alkaline solution, the crosslinking agent is added, and then the mixture is homogeneously mixed to carry out a reaction of the reactants.

Since the hyaluronic acid is a concept that includes both an acid form and a salt thereof, in the preparation method of the present disclosure, the term "hyaluronic acid" includes all of hyaluronic acid, hyaluronate, and a mixture of hyaluronic acid and hyaluronate.

The aqueous alkaline solution is not particularly limited, but specifically reagents such as sodium hydroxide, potassium hydroxide, and ammonium hydroxide are used. The concentration of the aqueous alkaline solution is not particularly limited, and it is desirable to be 0.1 to 10 N for the dissolution and crosslinking reaction of hyaluronic acid.

The crosslinking agents may be one or more selected from the group consisting of 1,4-butanediol diglycidyl ether (BDDE), ethylene glycol diglycidyl ether (EGDGE), 1,6-hexanediol diglycidyl ether, propylene glycol diglycidyl ether, polypropylene glycol diglycidyl ether, polytetramethylene glycol diglycidyl ether, neopentyl glycol diglycidyl ether, polyglycerol polyglycidyl ether, diglycerol polyglycidyl ether, glycerol polyglycidyl ether, trimethylpropanepolyglycidyl ether, 1,2-(bis(2,3-epoxypropoxy)ethylene, pentaerythritol polyglycidyl ether, and sorbitol polyglycidyl ether.

The crosslinking agent reacts with the alcohol group in hyaluronic acid or the salt thereof to form an ether bond and form cross-linkage between hyaluronic acid or the salt thereof. It is known that the reaction between an epoxy functional group and alcohol proceeds under alkaline condition with a high temperature, and as the reaction progresses, with attachment to hyaluronic acid or the salt thereof, no by-product is produced. However, when reaction efficiency is low, the unreacted epoxy functional group among the various epoxy functional groups of the crosslinking agent that is bonded with hyaluronic acid or the salt thereof remains in the hyaluronic acid or the salt thereof, and such a residual amount of unreacted epoxy functional groups may cause reactions with substances in vivo later in the future, thereby requiring minimization for the reactions or additional reactions and processes to hydrolyze the epoxy functional group to convert to an inactive functional group. In addition, when an excess amount of crosslinking agent is added, there is a very high risk that the unreacted crosslinking agent would remain in the crosslinking material of hyaluronic acid or the salt thereof. Therefore, in an attempt to minimize such the risk, it is highly desirable to induce a high-efficiency reaction using an appropriate amount of crosslinking agent as described herein not only from the perspective of biocompatibility of the spherical hyaluronic acid bead gel but also from the perspective of manufacturing process efficiency.

The aqueous alkaline solution of hyaluronic acid or the salt thereof with the crosslinking agent homogenously mixed is mixed with various types of oils, stirred appropriately, and then subjected to a crosslinking reaction at a certain temperature. The concentration of the aqueous alkaline solution of hyaluronic acid or the salt thereof that is dispersed in the oil phase becomes high as the solvent gradually evaporates, and the efficiency of the reaction may be maximized as the actual reaction concentration increases, thereby enabling preparation of spherical hyaluronic acid bead gels with excellent physical properties using a small amount of crosslinking agent. Therefore, in the hyaluronic acid crosslinking reaction process described above, since the crosslinking reaction is carried out at a relatively high concentration as the crosslinking agent is mixed at a low concentration and the solvent evaporates, it is possible to take the advantages of when a low concentration of crosslinking agent is used and when a high concentration of crosslinking agent is used. Such the spherical hyaluronic acid bead gel preparation method may enable preparation of spherical hyaluronic acid bead gels possessing solid and special physical properties while securing efficiency in the crosslinking reaction.

In the first operation, the crosslinking agent may be mixed in a ratio of 1 to 30 eq% based on a repeating unit of hyaluronic acid. It is desirable if the concentration of the crosslinking agent is in the range, since it is a safe bead gel with a high degree of swelling with the shape well retained. On the other hand, when it is less than 1 eq%, it is undesirable due to the disadvantage of being easily decomposed with the shape unmaintained, and, when it is greater than 30 eq%, it is undesirable because the frequency of side effects occurring due to high use of crosslinking agents increases while user convenience is reduced due to the hardness with a low degree of swelling.

In addition, in the first operation, for the concentration of hyaluronic acid, mixing may be performed in a ratio of 1 to 30 wt% for 0.1 to 10 N of aqueous alkaline solution. If the concentration of hyaluronic acid or the salt thereof is in the above range, homogeneous mixing and reaction are allowed, and it is desirable since bead gels capable of maintaining the shape while having a high degree of swelling may be formed. On the other hand, if it is less than 1 wt%, it is undesirable because it is difficult to maintain the shape due to poor crosslinking, and if it is greater than 30 wt%, uneven reactions occur since homogeneous mixing is difficult due to too high concentration in addition to hardness due to too high crosslinking.

The temperature during the crosslinking reaction of the reaction mixture is not particularly limited, but it is desirable to be 5°C to 50°C, and 15°C to 40°C is more desirable. In addition, the duration for generating crosslinking in the reaction solution is not particularly limited, but the longer the reaction time, the lower the physical viscoelasticity of the spherical hyaluronic acid bead gel prepared by hydrolyzing hyaluronic acid by alkaline conditions, such that the reaction time for the first operation may be 30 minutes to 24 hours.

The second operation is to disperse the reactant in oil and then perform cross-linkage to prepare a spherical gel. Specifically, the reaction time for the second operation may be from 1 hour to 96 hours.

After the crosslinking reaction in the first operation, the spherical thermosensitive hyaluronic acid bead gel in a uniform spherical shape that is transparent and has a very high degree of swelling is formed through the crosslinking reaction again in a state of being dispersed in the oil, and preparation may be enabled by adjusting a ratio of the oil and the hyaluronic acid solution without using a separate emulsifier, surfactant, and solubilizing agent.

The oil is one or more selected from the group consisting of mineral oil, medium chain triglycerides, menhaden oil, linseed oil, coconut oil, cod oil (fish oil), soya bean oil, whale oil, cotton seed oil, sesame seed oil, peanut oil, olive oil, lard oil, palms oil, corn oil, rapeseed oil, bone oil, china wood oil, and castor oil.

In the second operation, the reaction mixture and the oil may be mixed in a weight ratio of 1:1 to 1:9. If the mixing weight ratio of the aqueous alkaline solution of hyaluronic acid or the salt thereof and the oil is in the above range, it is desirable because uniform bead gel with excellent productivity may be formed. On the other hand, if the mixing weight ratio of the aqueous alkaline solution of hyaluronic acid or the salt thereof and the oil is less than 1:1, it is undesirable because uniform dispersion in the oil phase is difficult due to clumping caused by the aqueous alkaline solution of hyaluronic acid or the salt thereof whose amount exceeds that of oil, and if it is greater than 1:9, though the aqueous alkaline solution of hyaluronic acid or the salt thereof is uniformly dispersed in the oil phase, it is undesirable due to less productivity relative to volume.

As described above, when mixing the reaction mixture with various types of oils, the mixing time and the oil ratio to the aqueous solution may be adjusted to control the physical properties of the spherical hyaluronic acid bead gel.

While the size of the spherical hyaluronic acid bead gel with no emulsifier added is adjusted by the stirring rate, the type of oil, and the ratio of oil to the aqueous solution, the higher the viscosity of the oil, the smaller the size of the spherical hyaluronic acid bead gel. This is because the aqueous alkaline solution of hyaluronic acid and the salt thereof which has relatively higher viscosity than the oil phase is dispersed more smoothly as the viscosity difference between the two phases decreases.

In addition, the size of the beads decreases as the stirring rate increases, and the viscosity of the aqueous alkaline solution of hyaluronic acid and the salt thereof is low.

The third operation is a purification operation in which the spherical gel prepared in the second operation is recovered to remove unreactants and impurities.

The third operation is to purify the spherical gel by (a) primarily washing the spherical gel prepared in the second operation using one or more selected from the group consisting of distilled water, an acidic solution, an aqueous solution with an acidic salt added, and phosphate buffer saline; (b) secondarily washing the primarily washed spherical gel with an aqueous organic solvent solution; and (c) tertiarily washing the secondarily washed spherical gel using one or more selected from distilled water, an acidic solution, an aqueous solution with an acidic salt added, and phosphate buffer saline.

In operations (a) and (c), washing is performed several times independently using distilled water, the acidic solution or aqueous solution with the acidic salt added and phosphate buffer saline to remove unreacted crosslinking agents and hydroxide ions.

By using the aqueous solution with the salt added, the cleaning efficiency of the unreactant may be increased, wherein an aqueous sodium chloride solution, an aqueous phosphoric acid solution, and an aqueous sodium chloride solution in which phosphate is included are most suitable.

The organic solvent may include one or more selected from dimethyl sulfoxide (DMSO), dimethylformamide (DMF), acetonitrile, methanol, tetrahydrofuran (THF), acetone, an aqueous acetone solution, and an alcohol with 2-6 carbon atoms. In operation (b), the aqueous organic solvent solution serves to remove oil.

The weight ratio of distilled water to organic solvent in the aqueous organic solvent solution may be 9:1 to 1:9. If the weight ratio of distilled water to organic solvent is in the above range, it is desirable because the bead gel is appropriately swollen to make it easy to remove oil and impurities. On the other hand, if the weight ratio of distilled water to organic solvent is greater than 9:1, the bead gel is not sufficiently swollen due to the high weight ratio of organic solvent and it is undesirable since oil and impurities are not easily removed, and, if it is less than 1:9, it is undesirable since oil and impurities are not easily removed due to the low weight ratio of the organic solvent.

As described above, the physical properties of the spherical hyaluronic acid bead gel prepared according to the characteristics that the reactant is mixed in the organic solvent and the oil may vary, and the closer a polarity index of the organic solvent to distilled water, the higher the transparency of the prepared spherical hyaluronic acid bead gel and the lower the composite viscosity, thereby enabling preparation of the spherical hyaluronic acid bead gel having various physical properties.

The fourth operation is to prepare the thermosensitive hyaluronic acid bead gel by mixing the purified spherical gel and the ternary copolymer.

Specifically, the spherical thermosensitive hyaluronic acid bead gel may be prepared by swelling the purified spherical gel in a buffer solution, mixing with the ternary copolymer to infiltrate the ternary copolymer into the swollen hyaluronic acid bead gel, and then sterilizing at a temperature of 120 to 125°C.

Alternatively, the spherical thermosensitive hyaluronic acid bead gel may be prepared by recovering the purified spherical hyaluronic acid bead gel in a state of being precipitated using an organic solvent or aqueous organic solvent solution, drying by nitrogen, air, heat, and reduced pressure, sorting the spherical thermosensitive hyaluronic acid bead gel by size and shape depending on the purposes in the medical application, swelling with a buffer solution, mixing with a thermosensitive synthetic polymer for preparation, and then sterilizing at a temperature of 120 to 125°C.

As the organic solvent used for precipitation of the spherical hyaluronic acid bead gel, dimethyl sulfoxide (DMSO), dimethylformamide (DMF), acetonitrile, methanol, tetrahydrofuran (THF), acetone, aqueous acetone solution, alcohol with 2-6 carbon atoms such as ethanol, or aqueous alcohol solution may be used. In addition, the buffer solution may be phosphate buffer saline (PBS).

In the fourth operation, the ternary copolymer may be mixed in a concentration of 80 to 120 mg/ml or 90 to 110 mg/ml.

The ternary copolymer may be polyethylene oxide-polypropylene oxide-polyethylene oxide in a range of 1 to 500 kDa.

### Modes for Carrying Out the Invention

Hereinafter, the present disclosure will be described in more detail through example embodiments. These example embodiments are intended only to describe the present disclosure in more detail, and it will be apparent to those skilled in the art that the scope of the disclosure is not limited by these example embodiments according to the gist of the present disclosure.

### Examples

### [Example 1] Preparation of the spherical thermosensitive hyaluronic acid bead gel

Sodium hyaluronate (molecular weight: 1,000,000) was added, at a concentration of 50 mg/ml, to 166 mL of 0.25 NNaOH solution, and, at the same time, 0.4183 g of butanediol diglycidyl ether (BDDE) was added (equivalent ratio of BDDE to hyaluronic acid repeating unit: 10 mol%). After mixing by a planetary centrifugal mixer for 30 minutes, a first operation reaction was performed at 40°C for 1 hour. The reactant was dropped onto 332 g of MCT oil. While stirring at 700 rpm, a second operation reaction was performed at 40°C for 24 hours.

After 24 hours, 500 ml of isopropanol was slowly added to recover hyaluronic acid beads that are dispersed in a mixture solution. Washing was performed three times using isopropanol. The recovered hyaluronic acid beads were washed five times with 5 L of PBS each. Precipitation was performed by adding 1 L of isopropanol to the washed hyaluronic acid beads. With three times repetition, isopropanol replacement was performed. 1.5 L of 30% isopropanol was added to the precipitate to swell for 1 hour. After swelling and three times repetition, isopropanol replacement was performed. The sediment was washed again five times with 5 L of PBS each.

A part of the washed spherical hyaluronic acid bead gel was swollen in PBS, and then Pluronic F127 was added to the bead gel to be 100 mg/mL, and then sterilization was performed at 121°C to prepare the spherical thermosensitive hyaluronic acid bead gel, wherein some of the other spherical hyaluronic acid bead gels were subjected to an organic solvent precipitation process, nitrogen gas drying process, sorting process, PBS re-swelling process, and 121°C sterilization process to prepare the spherical hyaluronic acid bead gel in a size and shape suitable for each application.

### [Comparative Example 1] Preparation of the spherical hyaluronic acid bead gel

Sodium hyaluronate (molecular weight: 1,000,000) was added, at a concentration of 50 mg/ml, to 166 mL of 0.25 N NaOH solution and, at the same time, 0.4183 g of butanediol diglycidyl ether (BDDE) was added (equivalent ratio of BDDE to hyaluronic acid repeating unit: 10 mol%). After mixing by a planetary centrifugal mixer for 30 minutes, a first operation reaction was performed at 40°C for 1 hour. The reactant was dropped onto 332 g of MCT oil. While stirring at 700 rpm, a second operation reaction was performed at 40°C for 24 hours.

After 24 hours, 500 ml of isopropanol was slowly added to recover hyaluronic acid beads that are dispersed in a mixture solution. Washing was performed three times using isopropanol. The recovered hyaluronic acid beads were washed five times with 5 L of PBS each. Precipitation was performed by adding 1 L of isopropanol to the washed hyaluronic acid beads. With three times repetition, isopropanol replacement was performed. 1.5 L of 30% isopropanol was added to the precipitate to swell for 1 hour. After swelling and three times repetition, isopropanol replacement was performed. The sediment was washed again five times with 5 L of PBS each.

A part of the washed spherical hyaluronic acid bead gel was swollen in PBS, and then Pluronic F127 was added to the bead gel to be 25 mg/mL, and then sterilization was performed at 121°C to prepare the spherical thermosensitive hyaluronic acid bead gel, wherein some of the other spherical hyaluronic acid bead gels were subjected to an organic solvent precipitation process, nitrogen gas drying process, sorting process, PBS re-swelling process, and 121°C sterilization process to prepare the spherical hyaluronic acid bead gel in a size and shape suitable for each application.

### [Comparative Example 2] Preparation of the spherical hyaluronic acid bead gel

Sodium hyaluronate (molecular weight: 1,000,000) was added, at a concentration of 50 mg/ml, to 166 mL of 0.25 N NaOH solution and, at the same time, 0.4183 g of butanediol diglycidyl ether (BDDE) was added (equivalent ratio of BDDE to hyaluronic acid repeating unit: 10 mol%). After mixing by a planetary centrifugal mixer for 30 minutes, a first operation reaction was performed at 40°C for 1 hour. The reactant was dropped onto 332 g of MCT oil. While stirring at 700 rpm, a second operation reaction was performed at 40°C for 24 hours.

After 24 hours, 500 ml of isopropanol was slowly added to recover hyaluronic acid beads that are dispersed in a mixture solution. Washing was performed three times using isopropanol. The recovered hyaluronic acid beads were washed five times with 5 L of PBS each. Precipitation was performed by adding 1 L of isopropanol to the washed hyaluronic acid beads. With three times repetition, isopropanol replacement was performed. 1.5 L of 30% isopropanol was added to the precipitate to swell for 1 hour. After swelling and three times repetition, isopropanol replacement was performed. The sediment was washed again five times with 5 L of PBS each.

A part of the washed spherical hyaluronic acid bead gel was swollen in PBS, and then Pluronic F127 was added to the bead gel to be 50 mg/mL, and then sterilization was performed at 121°C to prepare the spherical thermosensitive hyaluronic acid bead gel, wherein some of the other spherical hyaluronic acid bead gels were subjected to an organic solvent precipitation process, nitrogen gas drying process, sorting process, PBS re-swelling process, and 121°C sterilization process to prepare the spherical hyaluronic acid bead gel in a size and shape suitable for each application.

### [Comparative Example 3] Preparation of the spherical hyaluronic acid bead gel

Sodium hyaluronate (molecular weight: 1,000,000) was added, at a concentration of 50 mg/ml, to 166 mL of 0.25 N NaOH solution and, at the same time, 0.4183 g of butanediol diglycidyl ether (BDDE) was added (equivalent ratio of BDDE to hyaluronic acid repeating unit: 10 mol%). After mixing by a planetary centrifugal mixer for 30 minutes, a first operation reaction was performed at 40°C for 1 hour. The reactant was dropped onto 332 g of MCT oil. While stirring at 700 rpm, a second operation reaction was performed at 40°C for 24 hours.

After 24 hours, 500 ml of isopropanol was slowly added to recover hyaluronic acid beads that are dispersed in a mixture solution. Washing was performed three times using isopropanol. The recovered hyaluronic acid beads were washed five times with 5 L of PBS each. Precipitation was performed by adding 1 L of isopropanol to the washed hyaluronic acid beads. With three times repetition, isopropanol replacement was performed. 1.5 L of 30% isopropanol was added to the precipitate to swell for 1 hour. After swelling and three times repetition, isopropanol replacement was performed. The sediment was washed again five times with 5 L of PBS each.

A part of the washed spherical hyaluronic acid bead gel was swollen in PBS, and then Pluronic F127 was added to the bead gel to be 75 mg/mL, and then sterilization was performed at 121°C to prepare the spherical thermosensitive hyaluronic acid bead gel, wherein some of the other spherical hyaluronic acid bead gels were subjected to an organic solvent precipitation process, nitrogen gas drying process, sorting process, PBS re-swelling process, and 121°C sterilization process to prepare the spherical hyaluronic acid bead gel in a size and shape suitable for each application.

### [Comparative Example 4] Preparation of the spherical hyaluronic acid bead gel

Sodium hyaluronate (molecular weight: 1,000,000) was added, at a concentration of 50 mg/ml, to 166 mL of 0.25 N NaOH solution and, at the same time, 0.4183 g of butanediol diglycidyl ether (BDDE) was added (equivalent ratio of BDDE to hyaluronic acid repeating unit: 10 mol%). After mixing by the planetary centrifugal mixer for 30 minutes, a first operation reaction was performed at 40°C for 1 hour. The reactant was dropped onto 332 g of MCT oil. While stirring at 700 rpm, a second operation reaction was performed at 40°C for 24 hours.

After 24 hours, 500 ml of isopropanol was slowly added to recover hyaluronic acid beads that are dispersed in a mixture solution. Washing was performed three times using isopropanol. The recovered hyaluronic acid beads were washed five times with 5 L of PBS each. Precipitation was performed by adding 1 L of isopropanol to the washed hyaluronic acid beads. With three times repetition, isopropanol replacement was performed. 1.5 L of 30% isopropanol was added to the precipitate to swell for 1 hour. After swelling and three times repetition, isopropanol replacement was performed. The sediment was washed again five times with 5 L of PBS each.

A part of the washed spherical hyaluronic acid bead gel was swollen in PBS, and then Pluronic F127 was added to the bead gel to be 125 mg/mL, and then sterilization was performed at 121°C to prepare the spherical thermosensitive hyaluronic acid bead gel, wherein some of the other spherical hyaluronic acid bead gels were subjected to an organic solvent precipitation process, nitrogen gas drying process, sorting process, PBS re-swelling process, and 121°C sterilization process to prepare the spherical hyaluronic acid bead gel in a size and shape suitable for each application.

### [Comparative Example 5] Preparation of the spherical hyaluronic acid bead gel

Sodium hyaluronate (molecular weight: 1,000,000) was added, at a concentration of 50 mg/ml, to 166 mL of 0.25 N NaOH solution and, at the same time, 0.4183 g of butanediol diglycidyl ether (BDDE) was added (equivalent ratio of BDDE to hyaluronic acid repeating unit: 10 mol%). After mixing by the planetary centrifugal mixer for 30 minutes, a first operation reaction was performed at 40°C for 1 hour. The reactant was dropped onto 332 g of MCT oil. While stirring at 700 rpm, a second operation reaction was performed at 40°C for 24 hours.

After 24 hours, 500 ml of isopropanol was slowly added to recover hyaluronic acid beads that are dispersed in a mixture solution. Washing was performed three times using isopropanol. The recovered hyaluronic acid beads were washed five times with 5 L of PBS each. Precipitation was performed by adding 1 L of isopropanol to the washed hyaluronic acid beads. With three times repetition, isopropanol replacement was performed. 1.5 L of 30% isopropanol was added to the precipitate to swell for 1 hour. After swelling and three times repetition, isopropanol replacement was performed. The sediment was washed again five times with 5 L of PBS each.

A part of the washed spherical hyaluronic acid bead gel was swollen in PBS, and then Pluronic F127 was added to the bead gel to be 150 mg/mL, and then sterilization was performed at 121°C to prepare the spherical thermosensitive hyaluronic acid bead gel, wherein some of the other spherical hyaluronic acid bead gels were subjected to an organic solvent precipitation process, nitrogen gas drying process, sorting process, PBS re-swelling process, and 121°C sterilization process to prepare the spherical hyaluronic acid bead gel in a size and shape suitable for each application.

### [Experimental Example] Comparison of physical properties of the spherical thermosensitive hyaluronic acid bead gel prepared in Example 1 and the spherical hyaluronic acid bead gels prepared in Comparative Examples 1, 2, 3, 4, and 5

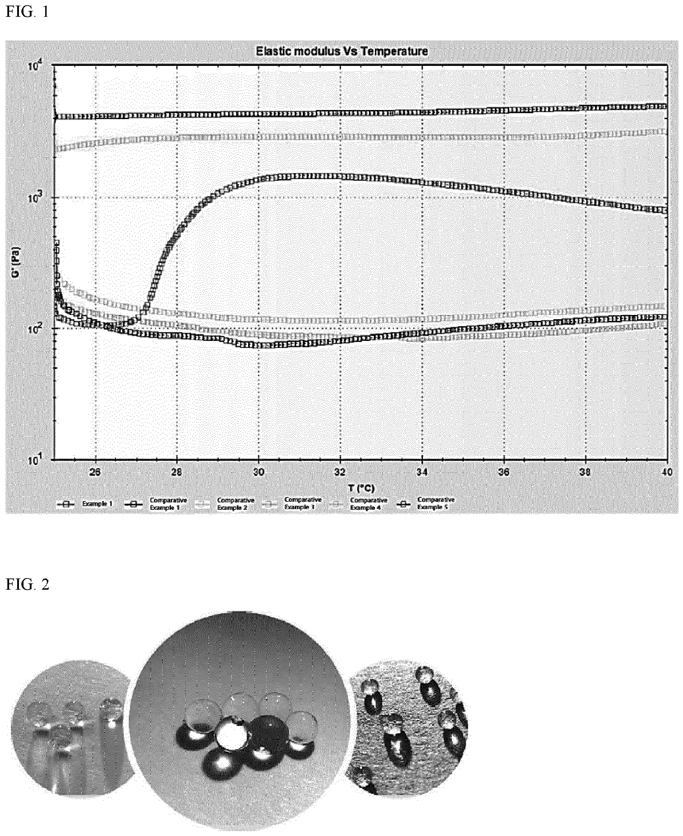

It was determined that the thermosensitive hyaluronic acid bead gels prepared in Example 1 and Comparative Examples 1, 2, 3, 4, and 5 were spherical (FIG. 2).

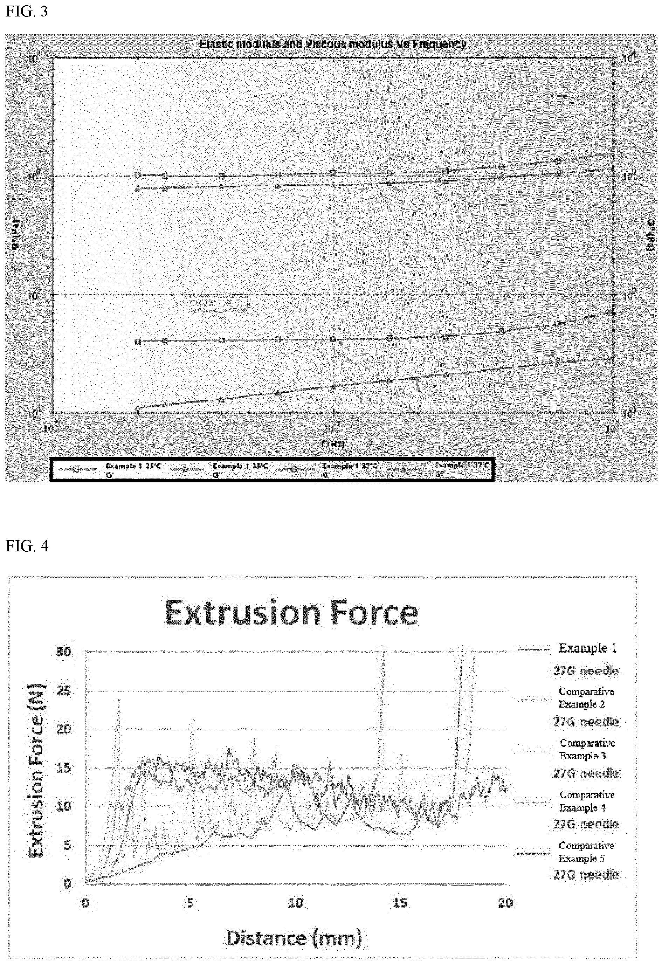

In order to identify the rheological properties of the spherical thermosensitive hyaluronic acid bead gels prepared in Example 1 and Comparative Examples 1, 2, 3, 4, and 5, a rheometer was used to identify changes in the value of storage modulus (G', Pa) according to temperature through temperature sweep (1 Hz, frequency) from 25°C to 40°C (FIG. 1, Table 1). It was observed that physical properties were significantly changed according to temperature in Example 1, and measurement (complex modulus, storage modulus, and loss modulus) was performed through the frequency sweep at 25°C and 37°C at a frequency of 0.02 to 1 Hz (FIG. 3), finding that high physical properties appeared at 37°C.

Referring to FIG. 3, the value of storage modulus in the entire region of 1 to 0.02 Hz was maintained higher than that of loss modulus, thus showing excellent viscoelasticity with good shape retention ability owing to high elastic modulus, while storage modulus (Pa) was increasing from 105.4 to 1,023 with an increase in a temperature, thereby showing excellent performance as a gel-type tissue repairing material.

**TABLE 1**

| | Example 1 | Comparative Example 1 | Comparative Example 2 | Comparative Example 3 | Comparative Example 4 | Comparative Example 5 |
|---|---|---|---|---|---|---|
| G'_{25°C}(Pa) | 105.4 | 74.15 | 113.6 | 82.78 | 2,317 | 4,074 |
| G'_{37°C}(Pa) | 1,023 | 110 | 132.3 | 92.18 | 2,885 | 4,726 |
| G'_{37°C}(Pa)/ G'_{25°C}(Pa) | 9.71 | 1.48 | 1.16 | 1.11 | 1.25 | 1.16 |

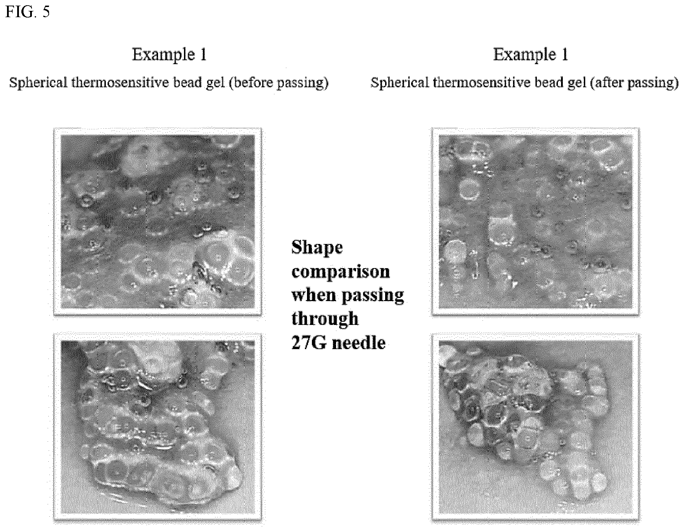

As a result of measuring the extrusion force of the spherical thermosensitive hyaluronic acid bead gel prepared in Example 1 and Comparative Examples 1, 2, 3, 4, and 5 (FIG. 5), it was 7.14 ± 2.39 N when equipped with 27G needle in Example 1, 10.31 ± 2.55 N when equipped with 27G needle in Comparative Example 1, 8.79 ± 2.55 N when equipped with 27G needle in Comparative Example 2, 10.09 ± 2.49 N when equipped with 27G needle in Comparative Example 3, 12.91 ± 1.09 N when equipped with 27G needle in Comparative Example 4, and 12.79 ± 2.15 N when equipped with 27G needle in Comparative Example 5, showing excellent usability with lower results compared to the values of 10 to 20 N which are the extrusion force of major products that are currently sold in the market. It was determined that the spherical thermosensitive hyaluronic acid bead gel prepared in Example 1 well maintained the spherical shape without shape deformation even after passing the 27G needle (FIG. 5).

This shows that the shape of the spherical bead is not deformed even at the maximum extrusion force of 25 N in FIG. 5 even after the procedure with the needle equipped, and the elasticity of the bead gel was excellent enough to maintain the spherical shape, such that it is possible to maintain the spherical shape even when an external impact was applied at the treatment site.

As above, specific parts of the present disclosure have been described in detail, it is apparent to those skilled in the art that such specific descriptions are only preferred example embodiments, and the scope of the present disclosure is not limited thereby. Thus, the substantial scope of the present disclosure will be defined by the appended claims and their equivalents.

The scope of the present disclosure is indicated by the claims described below, and the meaning and scope of the claims and all changes or modified forms derived from the equivalence concept thereof should be construed as being included in the scope of the present disclosure.

## Claims

1. A thermosensitive hyaluronic acid bead gel comprising hyaluronic acid and a ternary copolymer,
wherein a value of storage modulus (G', Pa) of the thermosensitive hyaluronic acid bead gel at 1 Hz through a frequency sweep is more than twice at 37°C than that at 25°C.

2. The thermosensitive hyaluronic acid bead gel of claim 1, wherein the thermosensitive hyaluronic acid bead gel has a spherical shape, and
an average diameter of the thermosensitive hyaluronic acid bead gel is 50 to 2000 µm.

3. The thermosensitive hyaluronic acid bead gel of claim 1, wherein the thermosensitive hyaluronic acid bead gel comprises 8 to 12 wt% of the ternary copolymer.

4. The thermosensitive hyaluronic acid bead gel of claim 1, wherein the ternary copolymer is polyethylene oxide-polypropylene oxide-polyethylene oxide in a range of 1 to 500 kDa.

5. The thermosensitive hyaluronic acid bead gel of claim 1, wherein the thermosensitive hyaluronic acid bead gel is prepared by mixing a spherical gel which is prepared by dispersing a reaction mixture obtained by mixing hyaluronic acid, a crosslinking agent, and an aqueous alkaline solution in oil followed by crosslinking; and the ternary copolymer.

6. The thermosensitive hyaluronic acid bead gel of claim 5, wherein the spherical gel is prepared by dispersing the reaction mixture in the oil followed by crosslinking to prepare the spherical gel and then recovering the spherical gel to purify it by removing unreactants and impurities.

7. The thermosensitive hyaluronic acid bead gel of claim 6, wherein the spherical gel is purified by performing primary washing using one or more selected from the group consisting of distilled water, an acidic solution, an aqueous solution with an acidic salt added, and phosphate buffer saline, secondarily washing the primarily washed spherical gel with an aqueous organic solvent solution, and tertiarily washing the secondarily washed spherical gel using one or more selected from distilled water, an acidic solution, an aqueous solution with an acidic salt added, and phosphate buffer saline.

8. The thermosensitive hyaluronic acid bead gel of claim 5, wherein the crosslinking agent is mixed in a ratio of 1 to 30 eq% based on a repeating unit of hyaluronic acid.

9. The thermosensitive hyaluronic acid bead gel of claim 5, wherein a concentration of the hyaluronic acid is obtained by mixing in a ratio of 1 to 30 wt% with respect to 0.1 to 10 N of the aqueous alkaline solution.

10. The thermosensitive hyaluronic acid bead gel of claim 5, wherein the reaction mixture and the oil are mixed in a weight ratio of 1:1 to 1:9.

11. The thermosensitive hyaluronic acid bead gel of claim 10, wherein, in the aqueous organic solvent solution, a weight ratio of distilled water to an organic solvent is 9:1 to 1:9.

12. The thermosensitive hyaluronic acid bead gel of claim 10, wherein the organic solvent is one or more selected from dimethyl sulfoxide (DMSO), dimethylformamide (DMF), acetonitrile, methanol, tetrahydrofuran (THF), acetone, an aqueous acetone solution, and an alcohol with 2-6 carbon atoms.
